# EUROPEAN PATENT SPECIFICATION

(11) **EP 1 415 544 B1**
(45) Date of publication and mention of the grant of the patent: **16.01.2008**
(21) Application number: 03022480.2
(22) Date of filing: 08.10.2003
(51) Int. Cl.: A23G 9/30, A23G 9/20

(54) **Method for the pasteurization of liquid mixtures for the manufacture of ice cream**
Methode zum Pasteurisieren von flüssigen Eiskremmischungen
Procédé pour la pasteurisation des mélanges liquides pour la production de crème glacée

(30) Priority: 30.10.2002 IT GE20020100
(43) Date of publication of application: 06.05.2004
(73) Proprietor: ALI S.p.A. - CARPIGIANI GROUP, 40011 Anzola Emilia (Bologna) (IT)
(72) Inventor: Cocchi, Gino, 40137 Bologna (IT); Zaniboni, Gianni, 40044 Borgonuovo di Sasso Marconi (IT); Lazzarini, Roberto, 42100 Reggio Emila (IT)
(74) Representative: Porsia, Attilio

(56) References cited:
- EP-A- 0 812 544
- DE-A1- 1 954 134
- GB-A- 1 166 338
- US-A- 4 313 370
- US-A- 4 522 041
- US-A- 5 201 861

## Description

This invention relates to a method for the pasteurization of liquid mixtures for the manufacture of ice cream. More particularly the invention relates to a method for the sterilization of liquid mixtures for ice cream for machines for the manufacture of ice cream of the type known as "soft". In particular this method is especially suitable for use in machines for the manufacture of ice cream which use either containers containing a flexible bag placed in a box ("bag in box") or pressurized containers to contain the liquid mixture for ice cream.

As is known, liquid mixtures for ice cream are normally pasteurized using treatments of the thermal type, comprising heating the liquid mixture for ice cream to a temperature of around 65-85°C, followed by cooling. Treatments of this kind have various disadvantages, including the fact that the organoleptic properties (colour, smell, flavour, etc.) and nutritional properties of the ice cream produced may be adversely affected. In fact coagulation of the protein substances present in liquid mixtures for ice cream already occurs at a temperature of approximately 60°C with consequent changes in the taste and digestibility of the ice cream produced using such liquid mixtures. On the other hand pasteurization treatments are necessary because such liquid mixtures for ice cream may be contaminated by a number of bacteria, in particular staphylococci, coliforms, enterococci and others which find these liquid mixtures with a high sugar and protein content to be a particularly favourable culture medium for their growth.

The object of this invention is therefore to overcome the disadvantages of known thermal pasteurization treatments using a method for pasteurizing liquid mixtures for ice cream which is simple and economic and to make it possible to maintain the organoleptic and nutritional properties of the ice cream produced thereby unchanged while at the same time destroying any bacterial load which may be present in the liquid mixture or ice cream, effectively inhibiting growth of the bacteria.

It is known that the main factors which can influence bacterial growth, retarding it or inhibiting it, or even bringing about destruction of the bacterial load are:
1) temperature, which beyond particular limits brings about the disadvantages mentioned above,
2) chemical-physical factors, in particular the effect exerted by the pH of the medium. In fact bacteria normally prefer pH values lying within the sub-acid-neutral-alkaline range.

From EP 0812544 a method for preparing dairy products having increased shelf-life is known, comprising the steps of pasteurising the dairy product at about 130-150°C, injecting CO₂ into said product, cooling said product at temperature of about 35°F to 50°F (2,2°C to 10°C) and maintaining it at said temperature for a time of 0,5 to 1 hour by pressurising the CO₂ blanket at about 2 to about 6 inches water column.

From GB 1166338 a method for preparing a dairy product is known according to which the dairy product is mixed with a gaseous carbon dioxide in order to reduce its pH value and is thereafter heated at a sterilising temperature exceeding 110°C for some minutes at increased pressure in order to prevent boiling of the product at this temperature

Surprisingly it has been discovered that subjecting liquid mixtures for ice cream to treatment comprising heating to temperatures below 60°C with the simultaneous injection of gaseous carbon dioxide at a pressure above atmospheric into the liquid mixtures for a time varying according to the liquid mixture being treated, but which is advantageously of the order of 3 to 6 hours, brings about complete sterilization of the liquid mixtures without the disadvantages of conventional processes.

It is thought that this result may be due to a synergistic effect arising from the combination of: (a) heat, although below the threshold generally considered to be essential to achieve pasteurization of such liquid mixtures, (b) the pressure of the CO₂ which, as is known, can destroy bacterial cell walls. It may also be thought that the formation of carbonic acid within the liquid mixture tends to displace the pH of the liquid mixture into the acid range.

The main object of this invention is therefore a method for the pasteurization of liquid mixtures for ice cream comprising the stages of heating the liquid mixture to a temperature below the coagulation temperature of the protein substances present in such a liquid mixture, with the simultaneous injection of gaseous carbon dioxide at a pressure above atmospheric into the liquid mixture.

Further objects, features and advantages of this invention will become evident in the course of the following description which is provided by way of a non-restrictive example.

### The machines used for converting the liquid mixtures for ice cream according to the invention into ice cream

Because the liquid mixtures for ice cream pasteurised using the method according to the invention can be used in any machine for the manufacture of ice cream, this method is particularly suitable for use in combination with non self-pasteurising ice-cream machines of the type in which (a) the liquid mixture is delivered from containers placed in a flexible bag (known as "bag in box") fitted with an attachment for a tube connected to the suction side of a pump whose output is connected to the cylinder of the machine producing the soft ice cream, or (b) machines of the type in which the liquid mixture is contained in pressurized tanks which can be connected to the cylinder of the machine producing the soft ice cream. In the course of the description below the invention is illustrated as being applied to a pressurized machine for the manufacture and delivery of ice cream of the soft type, of the type for example of the machine which is the subject matter of European patent application no. 02009730.9 by the same applicant. A machine of the "bag in box" type is instead illustrated and described for example in the European patent application no. 03010979.7 by the same applicant.

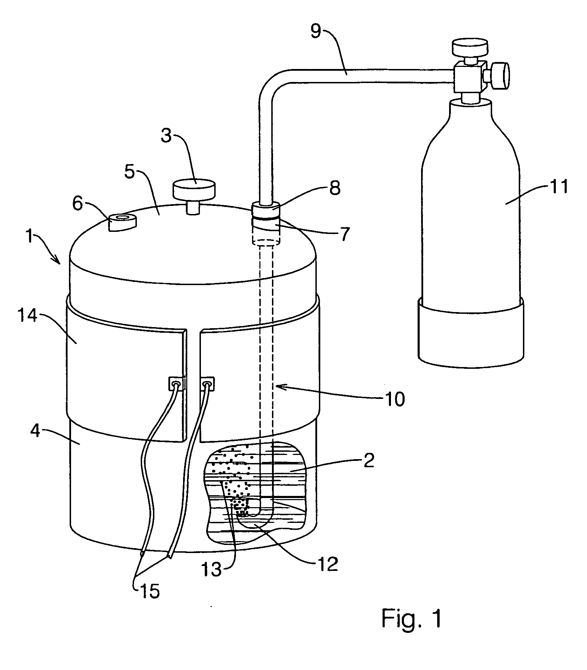

Figure 1 of the appended drawing illustrates a perspective view with parts in cross-section of a container for feeding liquid mixtures for ice cream into pressurized machines connected to a cylinder of carbon dioxide gas for processing the liquid mixture contained therein by the method of pasteurization according to this invention.

With reference to this drawing, 1 indicates a container for pressurized machines in which a mixture 2 in the liquid state for the manufacture of ice cream is placed through leaktight stopper 3. This container 1 comprises a metal cylinder which is sealed at the top by a hemispherical shell 5 in which two seats 6 and 7 for leaktight quick-fit connections are provided in addition to said stopper 3. In particular seat 7 receives a quick-fit connection 8 provided at the end of a tube 9 drawing carbon dioxide from a delivery cylinder 11. Within container 1 there is a pipe 10 which is connected at the top to seat 7 of quick-fit connection 8 and which has at its lower end an upwardly curving length 12 located almost at the bottom of container 1 through which the gaseous carbon dioxide is caused to bubble through liquid mixture 2 in the form of small bubbles 13. A flexible electrical resistance heating member 14 provided with corresponding electricity supply cables 15 is fitted around the cylindrical wall of container 1.

### The pasteurization of liquid mixtures in the pressurisable container

Once liquid mixture 2 has been placed in container 1 it is heated by electrical resistance strip 14 and then carbon dioxide under pressure fed from cylinder 11 is injected into container 1. This heating is thermostatically controlled to temperatures below 60°C, in particular to temperatures lying between 50-59°C and preferably approximately 55°C, as will be described below in the examples. The pressure of the carbon dioxide from cylinder 11 is regulated to a pressure of approximately 5-6 bar, preferably 5.5 bar. This treatment is continued for a time which can be varied between approximately 3 and approximately 6 hours. At the end of the treatment the container with the liquid mixture can be placed in a pressurized machine for the manufacture of ice cream in a known way.

The results of some tests on the method of pasteurizing liquid mixtures for the manufacture of ice cream according to this invention are described below by way of a non-restrictive example.

### Procedure and means used in the tests

The following tests involve the use of suitable substrates to detect any presence of or contamination by saprophytic bacteria present in the environment or in the liquid mixtures used. In this respect LB substrates were used for the total microorganism count, MacConkey Agar substrate (from the MERK company) was used for coliforms, Mannitol Salt Agar (from the DIFCO company) for staphylococci and Azide Maltose Agar (from the BIOLIFE company) for enterococci. A quantity of sample equal to 0.1 ml was uniformly distributed over each culture plate. Serial dilutions were made on the basis of potential contamination taking 1 ml of each sample of ice cream and diluting it in 9 ml of physiological saline. The plates were incubated in air at a temperature of 37°C. Any growth of coliforms was evaluated after 24 hours and any growth of enterococci and *Staphylococcus Aureus* was evaluated after 48 hours.

### Conduct of the tests

In all the tests a container 1 of the required capacity (generally 5 or 10 litres) was washed out manually with a detergent solution and a sterilizing solution. Container 1, to the jacket of which heating strip 14 was applied, was filled with the quantity of liquid mixture specified for the test inoculated with a suitable bacterial load.

### Test 1

4 litres of a liquid mixture for "Elena" chocolate ice cream inoculated as described were placed in a 5 litre container prepared as described. The following samples were taken for the purposes of the bacteriological check:
CO 0: Mixture inoculated and raised to a temperature of 58°C.
CO 1: Mixture taken from container 1 after 3 hours at 58°C.
CO 2: Mixture taken from container 1 at 52°C after 4 hours.
CO 3: Mixture taken from container 1 at 53°C after 6 hours.

The test was carried out with CO₂ being injected at a pressure of 5.5 bar at all times, with an average liquid mixture temperature of 55°C. The test was terminated after 6 hours.

**Results of Test 1 - Table 1**

| Microbiological examinations carried out on samples in the first test. Values expressed as number of cells per gram of sample | | | | |
|---|---|---|---|---|
| Sample | TML | S. aureus | Coliforms | Enterococci |
| CO 0: | 10⁵ | 6x10⁴ | 3x10⁴ | 1x10³ |
| inoculated mixture t=0 | | | | |
| CO 1: | <10² | <10² | <10² | <10² |
| inoculated mixture t=3h | | | | |
| CO 2: | <10² | <10² | <10² | <10² |
| inoculated mixture t=4h | | | | |
| CO 3: | <10² | <10² | <10² | <10² |
| inoculated mixture t=6h | | | | |

| | | | | |
|---|---|---|---|---|
| TML = total microorganism load | | | | |

As will be seen, this test resulted in complete elimination of the inoculum provided after as little as 3 hours.

### Test 2

In this test the object was to check whether the effect of the pressurized CO₂ was also apparent with larger quantities of liquid mixture, that is with approximately 8 litres.

8 litres of liquid mixture of Fiordilatte ice cream inoculated with a suitable bacterial load as previously described were placed in a container 1 having a capacity of 10 litres.

The following tests were carried out for the purposes of the bacteriological check:
CO 4: mixture as placed in container 1
CO 5: mixture heated to a temperature of 58°C
CO 6: mixture taken from container 1 after 3 hours at 58°C
CO 7: mixture taken from container 1 at 51°C after 5 hours
CO 8: mixture taken from container 1 at 54°C after 6 hours

**Results of Test 2 - Table 2**

| Microbiological examinations carried out on samples in the second test. Values expressed as number of cells per gram of sample | | | | |
|---|---|---|---|---|
| Sample | TML | S. aureus | Coliforms | Enterococci |
| CO 4: mixture as such | <10² | <10² | <10² | <10² |
| CO 5: | 6x10⁶ | 6x10⁴ | 6x10⁵ | 6x10⁵ |
| inoculated mixture t=0 | | | | |
| CO 6: | <10² | <10² | <10² | <10² |
| inoculated mixture t=3h | | | | |
| CO 7: | <10² | <10² | <10² | <10² |
| inoculated mixture t=5h | | | | |
| CO 8: | <10² | <10² | <10² | <10² |
| inoculated mixture t=6h | | | | |

| | | | | |
|---|---|---|---|---|
| TML = total microorganism load | | | | |

This second test, carried out using a larger quantity of liquid mixture for ice cream (8 litres) and keeping the pressure conditions for the CO₂, the temperature and the treatment time unchanged from test 1, resulted in total elimination of the inoculum after 3 hours, as well as after 5 and 6 hours.

### Test 3

The purpose of this test was to check that the effect of the pressurized CO₂ was present even if the CO₂ was not intimately mixed with the liquid mixture by causing it to bubble through the mixture, but keeping it in the headspace of the container without mixing it well with the liquid mixture for ice cream.

Test 2 above was repeated with the variant that the attachment for the CO₂ delivery pipe was connected to connection 6 on container 1 instead of connection 7 so that the CO₂ was fed to the top of container 1.

The following samples were taken for the purposes of the bacteriological check:
CO 9: mixture inoculated and raised to a temperature of +50°C while maintaining the delivery of CO₂ at a pressure of 5.5 bar to the top of container 1 at all times
CO 10: mixture taken from container 1 after 3 hours (+52°C)
CO 11: mixture taken from container 1 after 4 hours (+50°C)
CO 12: mixture taken from container 1 after 6 hours (+52°C)

**Results of comparative Test 3 - Table 3**

| Microbiological examinations carried out on samples in the third test. Values expressed as number of cells per gram of sample | | | | |
|---|---|---|---|---|
| Sample | TML | S. aureus | Coliforms | Enterococci |
| CO 9: inoculated mixture t=0 | >10⁶ | 2x10³ | 10x10⁶ | 4x10⁵ |
| CO 10: | >10⁶ | 27x10¹ | 7x10⁶ | 1.5x10⁶ |
| inoculated mixture t=3h | | | | |
| CO 11 : inoculated mixture t=4h | >10⁶ | 27x10³ | 8x10³ | 33:10⁵ |
| CO 12:inoculated liquid mixture t=6h | >10⁶ | 26x10³ | 10x10⁶ | 15x10⁶ |

| | | | | |
|---|---|---|---|---|
| TML = total microorganism load | | | | |

As will be seen, no decrease in the microorganism load was observed even after 6 hours contact between the pressurized CO₂ and the liquid mixture, so the results of this test demonstrate that pasteurization with CO₂ is only active if the CO₂ is caused to come into intimate contact with the liquid mixture.

## Claims

1. Method for the pasteurisation of liquid mixtures for ice cream, **characterised by** the following steps: heating the liquid mixture to a temperature below the coagulation temperature comprised between approximately 50°C and approximately 59°Cand simultaneously injecting into said heated mixture gaseous carbon dioxide at a pressure in the range from 5 to 6 bar for a period of between 3 to 6 hours.

2. Method according to claim 1, in which said temperature is equal to approximately 55°C.

3. Method according to claim 1, in which injection of said gaseous CO₂ takes place at a pressure of approximately 5.5 bar.

4. Method according to claim 1, in which said gaseous CO₂ is caused to bubble through said liquid mixture being treated.

## Patentansprüche

1. Verfahren zum Pasteurisieren von flüssigen Mischungen für Eiskrem, **gekennzeichnet durch** die folgenden Schritte: Erhitzen der flüssigen Mischung auf eine Temperatur unterhalb der Koagulationstemperatur, die zwischen ungefähr 50°C und ungefähr 59°C liegt, und gleichzeitiges Einbringen von gasförmigem Kohlendioxid in die erhitzte Mischung bei einem Druck im Bereich zwischen 5 und 6 bar über einen Zeitraum von 3 bis 6 Stunden.

2. Verfahren nach Anspruch 1, bei dem die Temperatur ungefähr gleich 55°C ist.

3. Verfahren nach Anspruch 1, bei dem das Einbringen von gasförmigem CO₂ bei einem Druck von ungefähr 5,5 bar stattfindet.

4. Verfahren nach Anspruch 1, bei dem bewirkt wird, dass das gasförmige CO₂ durch die behandelte flüssige Mischung perlt.

## Revendications

1. Procédé de pasteurisation de mélanges liquides pour de la crème glacée, **caractérisé par** les stades suivants : on porte le mélange liquide à une température inférieure au point de coagulation comprise entre environ 50°C environ 59°C et on injecte simultanément dans le mélange chauffé du dioxyde de carbone gazeux sous une pression comprise entre 5 et 6 bar pendant une durée comprise entre 3 et 6 heures.

2. Procédé suivant la revendication 1, dans lequel ladite température est égale à environ 55°C.

3. Procédé suivant la revendication 1, dans lequel on effectue l'injection du CO₂ gazeux sous une pression d'environ 5,5 bar.

4. Procédé suivant la revendication 1, dans lequel on fait barboter le CO₂ gazeux dans le mélange liquide à traiter.
